# EUROPÄISCHE PATENTANMELDUNG

(11) **EP 0 737 571 A1**
(43) Veröffentlichungstag der Anmeldung: **16.10.1996**
(21) Anmeldenummer: 96104120.9
(22) Anmeldetag: 15.03.1996
(51) Int. Cl.: B41F 13/00, F16M 1/00

(54) **Maschinengestell**

(30) Priorität: 10.04.1995 DE 19513537
(71) Anmelder: Heidelberger Druckmaschinen Aktiengesellschaft, D-69115 Heidelberg (DE)
(72) Erfinder: Rodi, Anton, 69181 Leimen (DE)
(74) Vertreter: Stoltenberg, Heinz-Herbert Baldo

(57) **Zusammenfassung**

Die Erfindung betrifft eine Maschine zur Herstellung von dreidimensionalen Strukturen auf einem Substrat und insbesondere eine Druckmaschine, die ein Maschinengestell und wenigstens zwei Einzelaggregate wie Druckwerke, Druckwalzen, Papiertransporteinrichtungen, Papierwendeeinrichtungen, Anleger oder Ausleger aufweist, welche in vorbestimmten Positionsbeziehungen an dem Maschinengestell befestigt sind. Mit dem Ziel, die Herstellungskosten einer solchen Maschine zu verringern, insbesondere sowohl auf möglichst einfache Weise Präzision zu erzielen als auch den Aufwand bei der Maschinenmontage zu minimieren, wird vorgeschlagen, zuerst in Leichtbauweise einen festen Rahmen (1) herzustellen, an dem dann durch eine im wesentlichen rückwirkungsfreie Präzisionsbearbeitung eine Anzahl von Paßeinrichtungen (7, 9, 10, 11, 12) für die Einzelaggregate gebildet werden. An die Genauigkeit bei der Vorfertigung des festen Rahmens brauchen keine besonderen Anforderungen gestellt zu werden, da paßgenaue Ankopplungs- und Fixierstellen für die Einzelaggregate erst durch die anschließende Präzisionsbearbeitung hergestellt werden, welche vorzugsweise mit Hilfe von Laserstrahlen durchgeführt wird.

## Beschreibung

Die Erfindung betrifft eine Maschine zur Herstellung von dreidimensionalen Strukturen auf einem Substrat, mit einem Maschinengestell und wenigstens zwei Einzelaggregaten, die in vorbestimmten Positionsbeziehungen an dem Maschinengestell befestigt sind, sowie ein Verfahren zur Herstellung des Maschinengestells dieser Maschine.

Bei der Maschine zur Herstellung von dreidimensionalen Strukturen auf einem Substrat ist in erster Linie an eine Druckmaschine mit mehreren Einzelaggregaten wie Druckwalzen bzw. Druckwerken, Papiertransporteinrichtungen, Papierwendeeinrichtungen, Anlegern, Auslegern usw. gedacht, die an einem gemeinsamen Maschinengestell befestigt sind.

Dieses Maschinengestell besteht bei herkömmlichen Druckmaschinen aus einem Grundgestell mit Seitenwänden, an denen die Einzelaggregate befestigt sind. Das Grundgestell und die Seitenwände bestehen aus getrennt vorgefertigten Teilen, im allgemeinen jeweils mehreren Einzelteilen, die Montageelemente zum Zusammenbau und für die Einzelaggregate bzw. Teile davon aufweisen.

Da die Einzelaggregate bzw. deren Teile ganz bestimmte, genau festgelegte Positionen in der Druckmaschine einnehmen müssen, stellt man die Einzelteile des Maschinengestells von vornherein mit möglichst hoher Präzision her. Abweichungen von den Sollmaßen, die für sich genommen tolerabel wären, können jedoch beim Zusammenbau des Maschinengestells aus den Einzelteilen kumulieren. Außerdem können ebene oder längliche Einzelteile leicht versehentlich verformt werden. Daher sind bei der Montage von herkömmlichen Druckmaschinen mehr oder weniger umfangreiche Justierungsarbeiten erforderlich, ob beim Zusammenbau des Maschinengestells oder beim anschließenden Einbau der Einzelaggregate in das Gestell, in der Regel bei beidem. Bei Servicearbeiten an der Maschine, die einen Ein- und Ausbau von Einzelaggregaten oder Teilen davon erfordern, sind außerdem erneute Justierungsarbeiten notwendig.

Die Präzision bei der Montage und Fertigung der Einzelteile des Maschinengestells und die gleichwohl erforderlichen Montage- und Justierungsarbeiten sind wesentliche Kostenfaktoren bei bekannten Druckmaschinen. Insgesamt am wirtschaftlichsten ist ein Kompromiß zwischen diesen Faktoren. Hat man diesen Kompromiß gefunden, so lassen sich keine weiteren Einsparungen erzielen, da dann z. B. der Mehraufwand für eine präzisere Vorfertigung der Einzelteile größer als die entsprechende Verringerung des Montage- und Justieraufwandes wäre.

Diese Problematik besteht nicht nur bei Druckmaschinen, sondern auch bei anderen Vorrichtungen, durch die ein Substrat mit dreidimensionalen Strukturen wie Schriften oder Bildern versehen wird, die zwei Dimensionen in der Substratebene und eine im allgemeinen wesentlich kleinere Dimension senkrecht zum Substrat aufweisen. Solche Strukturen werden zum Beispiel durch selektives Aufbringen irgendeines Pigmente enthaltenden Stoffs auf ein Substrat wie Papier gebildet, wie bei Laserdruckern oder Fotokopierern, oder auch durch physikalische Einwirkung auf ein Substrat, wie bei Thermodruckern. Damit die Schriften oder Bilder rastergetreu auf das Substrat übertragen werden, müssen die Einzelaggregate dieser Vorrichtungen, etwa die Farbübertragungs- und Papiertransporteinrichtungen, hochgenau positioniert sein, besonders wenn mehrere Farben vorgesehen sind.

Der Erfindung liegt die Aufgabe zugrunde, die Herstellungskosten einer solchen Maschine zu verringern, was im Hinblick auf die oben beschriebene Problematik bedeutet, sowohl auf möglichst einfache Weise höchste Präzision zu erzielen als auch den Montageaufwand zu minimieren.

Diese Aufgabe wird bei einer gattungsgemäßen Maschine erfindungsgemäß dadurch gelöst, daß das Maschinengestell eine in Leichtbauweise vorgefertigte, nicht zu demontierende Einheit ist, an der in vorbestimmten gegenseitigen Positionsbeziehungen Paßeinrichtungen für die Einzelaggregate gebildet sind.

Dieses Maschinengestell wird gemäß der Erfindung gebildet, indem in Leichtbauweise ein fester Rahmen hergestellt wird, an dem dann durch eine im wesentlichen rückwirkungsfreie Präzisionsbearbeitung eine Anzahl von Paßeinrichtungen für die Einzelaggregate gebildet werden.

Da es allein darauf ankommt, daß die gegenseitigen Positionsbeziehungen der Einzelaggregate genau eingehalten werden, braucht das Maschinengestell selbst nur mit vergleichsweise geringer Genauigkeit vorgefertigt zu werden. Die Form dieses vorgefertigten Gestells als Ganzes wird in der Folge nicht mehr verändert, weder während der nachfolgenden Präzisionsbearbeitung der Paßeinrichtungen, d. h. einzelner Stellen zur Positionierung bzw. paßgenauen Anbringung der Einzelaggregate, noch während des Einbaus bzw. der Wartung der Einzelaggregate.

Dazu ist es allerdings erforderlich, daß die Präzisionsbearbeitung rückwirkungsfrei erfolgt, d. h. ohne Verformung des Maschinengestells, und daß die Einzelaggregate ohne Demontage eingebaut werden können bzw. zugänglich sind.

Hinsichtlich des ersten Erfordernisses, also der Rückwirkungsfreiheit, sind Laserbearbeitungsgeräte optimal. Mit solchen Geräten können einerseits einzelne Paßeinrichtungen, z. B. Bohrungen, mit jeder gewünschten Formgenauigkeit hergestellt bzw. durch partielle Bearbeitung gezielt verändert werden, andererseits gestattet es die Kräftefreiheit, auch die gegenseitigen Positionsbeziehungen zwischen den Paßeinrichtungen leicht mit jeder gewünschten Genauigkeit herzustellen. Die so gefertigten Paßeinrichtungen legen die Positionen der Einzelaggregate in der Druckmaschine auf Dauer fest, so daß weder bei der Montage der Einzelaggregate noch bei späterer Wartung irgendwelche Justierungsarbeiten erforderlich sind.

Neben Laserstrahlen kommen auch Teilchenstrahlen für die Bearbeitung in Betracht, wie Ionenstrahlen oder Elektronenstrahlen. Ferner läßt sich eine im wesentlichen rückwirkungsfreie Bearbeitung auch mit einigen rein mechanischen Verfahren durchführen, wie z. B. Schleifen. Da diese Präzisionsbearbeitung nur an einzelnen Stellen des Maschinengestells durchgeführt werden muß und anschließend keine Justierungsarbeiten mehr erforderlich sind, sind die Maschine und das Verfahren gemäß der Erfindung insgesamt wirtschaftlicher als nach dem Stand der Technik.

Die rückwirkungsfreie Bearbeitung macht es außerdem möglich, das Maschinengestell in Leichtbauweise zu fertigen, vorzugsweise aus Blech, so daß noch eine weitere Kostenersparnis gegeben ist. Die notwendige Steifigkeit eines Blechgestells in Leichtbauweise läßt sich durch konstruktive Maßnahmen erzielen.

Das zweite genannte Erfordernis, die Montierbarkeit und Zugänglichkeit der Einzelaggregate, läßt sich ebenfalls durch geeignete Konstruktion des Maschinengestells gewährleisten. In der bevorzugten Ausführungsform weist das Maschinengestell zwei Seitenwände auf, zwischen denen die Einzelaggregate angeordnet sind und die durch wenigstens eine quer dazu verlaufende Wand miteinander verbunden sind. Öffnungen in den Wänden ermöglichen den Einbau der Einzelaggregate sowie einen Zugang zu den Einzelaggregaten im eingebauten Zustand. Werden die Einbauöffnungen mit der entsprechenden Präzision hergestellt, so erfüllen sie gleichzeitig die Funktion von Paßeinrichtungen für die dazugehörigen Einzelaggregate.

Die Seitenwände und die wenigstens eine quer dazu verlaufende Wand sind vorzugsweise parallel bzw. rechtwinklig zueinander angeordnete Bestandteile eines Blechrahmens, der einstückig gebildet, z. B. aus einem gebogenen Blech bzw. aus Einzelblechen zusammengeschweißt ist.

Außer den erwähnten Einbauöffnungen im Maschinengestell können als Paßeinrichtungen alle möglichen Ausnehmungen im oder Vorsprünge am Maschinengestell dienen, die zumindest teilweise paßgenau bearbeitet sind, um Ankopplungs- oder Fixierstellen für die Einzelaggregate zu bilden.

Zwar betrifft die bevorzugte und detailliert beschriebene Ausführungsform eine Druckmaschine mit mehreren Einzelaggregaten wie Druckwerken bzw. Druckwalzen, Papiertransporteinrichtungen, Papierwendeeinrichtungen, Anlegern oder Auslegern, die Erfindung ist mit den gleichen Vorteilen aber auch auf verwandte Geräte wie Fotokopierer usw. anwendbar, wie oben schon angesprochen.

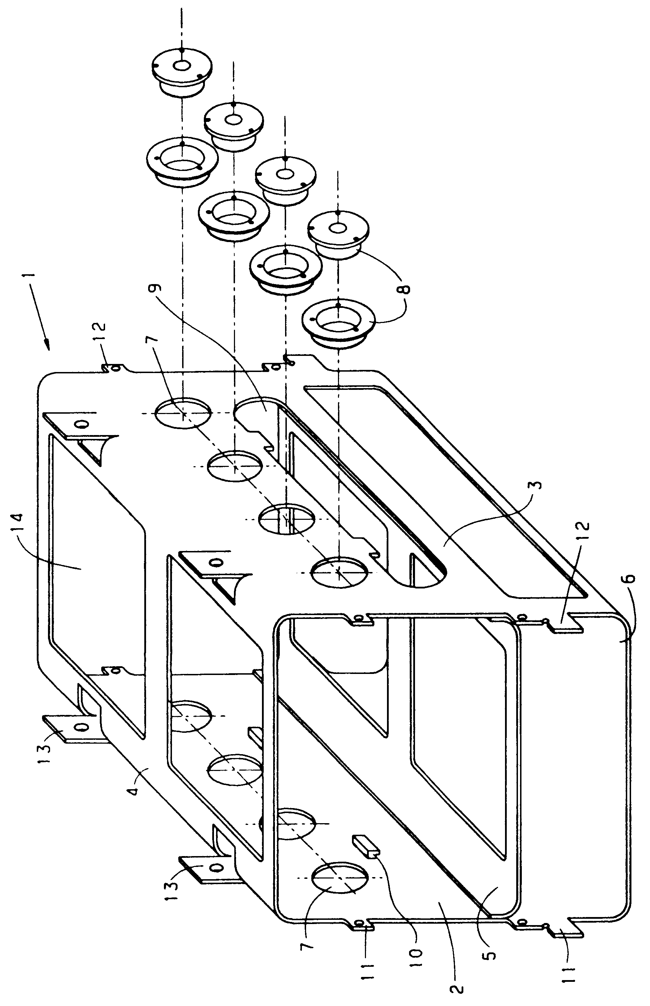

Weitere Merkmale und Vorteile der Erfindung ergeben sich aus der folgenden Beschreibung eines Ausführungsbeispiels und aus der Zeichnung, deren einzige Figur eine Perspektivansicht eines einstückigen Maschinengestells für eine Druckmaschine ist.

Ein Maschinengestell 1 ist ein einstückiger Blechrahmen mit zueinander parallelen Seitenwänden 2, 3, die sich in einem Abstand voneinander befinden, der größer als die Druckbreite einer auf der Basis des Maschinengestells 1 aufzubauenden Druckmaschine ist, und mit einer oberen Wand 4, einer mittleren Wand 5 und einer unteren Wand 6, die senkrecht zu den Seitenwänden 2, 3 angeordnet sind und die die Seitenwände 2, 3 miteinander verbinden. Das Maschinengestell 1 bildet eine stabile Einheit mit geringem Gewicht, die z. B. durch nicht dargestellte Sicken an den Wänden 2 bis 6 noch weiter versteift werden kann. Außerdem können die als offen darstellten Enden des Maschinengestells 1, durch die hindurch die Papierzuführung bzw. Papierausgabe erfolgt, teilweise durch Versteifungsbleche verschlossen sein.

Jede Seitenwand 2, 3 weist mehrere kreisrunde Bohrungen 7 auf, durch die hindurch nicht gezeigte Druckwalzen in das Maschinengestell 1 eingeschoben werden können. Die Bohrungen 7 haben einen ganz bestimmten Durchmesser und befinden sich in genau vorbestimmten gegenseitigen Positionsbeziehungen, d. h., daß jeweils eine Bohrung 7 in der Seitenwand 2 genau mit einer gegenüberliegenden Bohrung 7 in der Seitenwand 3 fluchtet und daß die Bohrungen 7 in jeder Seitenwand 2, 3 in genau festgelegten Abständen in einer Reihe hintereinander angeordnet sind, wie es der konstruktionsmäßig vorgesehenen Anordnung der Druckwalzen in der Maschine entspricht. Lagerbuchsen 8 für die Druckwalzen passen exakt in die Bohrungen 7 und Lassen sich durch nicht gezeigte Mittel darin befestigen.

Die Seitenwand 3 weist ferner einen Längsschlitz 9 auf, der parallel zu der Reihe der Bohrungen 7 verläuft. Der Längsschlitz 9 dient zur Aufnahme einer nicht gezeigten Papiertransporteinrichtung, zu deren Abstützung an der gegenüberliegenden Seitenwand 2 Lagerklötze 10 vorgesehen sind.

Die Seitenwände 2, 3 weisen an den offenen Enden des Maschinengestells 1 Ansätze 11, 12 zur Positionsfixierung in bezug auf einen nicht gezeigten Anleger bzw. Ausleger auf. Ferner stehen von den an die obere Wand 4 angrenzenden Kanten der Seitenwände 2, 3 Laschen 13 nach außen ab, die zur Verbindung des Maschinengestells 1 mit außen liegenden Einrichtungen dienen.

Die obere und die mittlere Seitenwand 4, 5 weisen großflächige Öffnungen 14 als Service-Zugänge zum Maschineninneren auf. Der Hohlraum zwischen der unteren Wand 6 und der mittleren Wand 7 kann für Hilfseinrichtungen genutzt werden, z. B. für die Maschinenelektronik.

Das Maschinengestell 1 wird hergestellt, indem zunächst auf herkömmliche Weise durch Schneiden, Biegen und Schweißen von Blech ein Halbzeug ohne erhöhte Genauigkeitsanforderungen hergestellt wird.

Anschließend wird das Maschinengestell 1 als Ganzes in einer entsprechend dimensionierten Vorrichtung zur Laserstrahlbearbeitung eingespannt, in der die Konturen der Bohrungen 7, des Längsschlitzes 9, der Lagerklötze 10 und der Ansätze 11, 12 sowie Bohrungen in den Laschen 13 feinstbearbeitet werden, wobei Maßhaltigkeiten sowohl der Konturen selbst als auch der gegenseitigen Positionsbeziehungen mit einer Genauigkeit in der Größenordnung von 10 µm oder besser hergestellt werden.

Wegen der Rückwirkungsfreiheit der Laserbearbeitung wird das Maschinengestell 1 dabei nicht verformt, und die einmal hergestellten Relativpositionen der als Ankopplungs- bzw. Fixierstellen dienenden Konturen der Bohrungen 7, des Längsschlitzes 9, der Lagerklötze 10, der Ansätze 11, 12 und der Laschen 13 bleiben auf Dauer erhalten.

Ohne auf irgendeine spezielle Druckmaschine beschränkt zu sein, veranschaulicht das Ausführungsbeispiel eine Anzahl von Möglichkeiten, in einem als Halbzeug vorgefertigten Maschinengestell präzise positionierte Ankopplungs- bzw. Fixierstellen für beliebige Einzelaggregate herzustellen, also nicht nur für Druckwalzen, Papiertransporteinrichtungen und An- bzw. Ausleger, sondern auch für Druckwerke, die als zusammenhängende Einheit montiert werden, für Kopierwerke oder Teile davon, für Papierwendeeinrichtungen und vieles anderes mehr.

## Patentansprüche

1. Maschine zur Herstellung von dreidimensionalen Strukturen auf einem Substrat, mit einem Maschinengestell und wenigstens zwei Einzelaggregaten, die in vorbestimmten Positionsbeziehungen an dem Maschinengestell befestigt sind,
**dadurch gekennzeichnet**,
daß das Maschinengestell (1) eine in Leichtbauweise vorgefertigte, nicht zu demontierende Einheit ist, an der in vorbestimmten gegenseitigen Positionsbeziehungen Paßeinrichtungen (7, 9, 10, 11, 12, 13) für die Einzelaggregate gebildet sind.

2. Maschine nach Anspruch 1,
**dadurch gekennzeichnet**,
daß das Maschinengestell (1) im wesentlichen aus Blech besteht.

3. Maschine nach Anspruch 2,
**dadurch gekennzeichnet**,
daß das Maschinengestell (1) zwei Seitenwände (2, 3) aufweist, zwischen denen die Einzelaggregate angeordnet sind und die durch wenigstens eine quer dazu verlaufende Wand (4, 5, 6) miteinander verbunden sind, und dadurch, daß wenigstens eine dieser Wände (2, 3, 4, 5, 6) wenigstens eine Öffnung (7, 9) aufweist, durch die hindurch eines der Einzelaggregate in das Maschinengestell einschiebbar ist und die außerdem eine Paßeinrichtung für dieses Einzelaggregat bildet.

4. Maschine nach Anspruch 3,
**dadurch gekennzeichnet**,
daß die Seitenwände (2, 3) und die wenigstens eine quer dazu verlaufende Wand (4, 5, 6) Bestandteile eines einstückigen Blechrahmens mit rechtwinkligem Profil sind.

5. Maschine nach einem der vorstehenden Ansprüche,
**dadurch gekennzeichnet**,
daß die Paßeinrichtungen paßgenaue Ausnehmungen (7, 9) im oder Vorsprünge (10, 11, 12, 13) am Maschinengestell (1) sind.

6. Maschine nach einem der vorstehenden Ansprüche,
**dadurch gekennzeichnet**,
daß die Maschine eine Druckmaschine ist, wobei die Einzelaggregate Druckwerke, Druckwalzen, Papiertransporteinrichtungen, Papierwendeeinrichtungen, Anleger oder Ausleger umfassen.

7. Verfahren zur Herstellung eines Maschinengestells zur Aufnahme von Einzelaggregaten einer Maschine zur Herstellung von dreidimensionalen Strukturen auf einem Substrat,
**dadurch gekennzeichnet**,
daß in Leichtbauweise ein fester Rahmen hergestellt wird, an dem dann durch eine im wesentlichen rückwirkungsfreie Präzisionsbearbeitung eine Anzahl von Paßeinrichtungen (7, 9, 10, 11, 12, 13) für die Einzelaggregate gebildet werden.

8. Verfahren nach Anspruch 7,
**dadurch gekennzeichnet**,
daß das Maschinengestell (1) im wesentlichen aus Blech hergestellt wird.

9. Verfahren nach Anspruch 8,
**dadurch gekennzeichnet**,
daß aus dem Blech ein einstückiger Rahmen mit rechtwinkligem Profil gebildet wird, der zwei Seitenwände (2, 3) und wenigstens eine quer dazu verlaufende Wand (4, 5, 6) aufweist, und dadurch, daß in wenigstens einer dieser Wände wenigstens eine Öffnung (7, 9) zum Einschieben eines der Einzelaggregate in die Maschine gebildet wird, wobei die Öffnung präzisionsbearbeitet wird, um außerdem eine Paßeinrichtung für dieses Einzelaggregat zu bilden.

10. Verfahren nach einem der Ansprüche 7 bis 9,
**dadurch gekennzeichnet**,
daß als Paßeinrichtungen paßgenaue Ausnehmungen (7, 9) im oder Vorsprünge (10, 11, 12, 13) am Maschinengestell (1) gebildet werden.

11. Verfahren nach einem der Ansprüche 7 bis 10,
**dadurch gekennzeichnet**,
daß die Präzisionsbearbeitung mittels Laserstrahlen durchgeführt wird.

12. Maschine nach einem der Ansprüche 7 bis 11,
**dadurch gekennzeichnet**,
daß die Maschine eine Druckmaschine ist, wobei die Einzelaggregate Druckwerke, Druckwalzen, Papiertransporteinrichtungen, Papierwendeeinrichtungen, Anleger oder Ausleger umfassen.
